# EUROPEAN PATENT APPLICATION

(11) **EP 1 837 093 A2**
(43) Date of publication of application: **26.09.2007**
(21) Application number: 07405081.6
(22) Date of filing: 12.03.2007
(51) Int. Cl.: B21D 39/00, B23P 15/00

(54) **Method for fabricating sheet metal product having three-dimensional shape, and product**

(30) Priority: 24.03.2006 JP 2006081964
(71) Applicant: YAMAZAKI MAZAK CORPORATION, Niwa gun, Aichi pref. (JP)
(72) Inventor: Yamazaki, Tsunehiko c/o Yamazaki Mazak Corporation, Niwa gun Aichi pref. (JP); Miyakawa, Naoomi c/o Yamazaki Mazak Corporation, Niwa gun Aichi pref. (JP)
(74) Representative: Moinas, Michel

(57) **Abstract**

The invention provides a method for fabricating a large sheet metal product having a three-dimensional shape such as a cover of a machine tool, without performing a welding process, and a product fabricated by the same. A cover unit 1 of a machine tool is fabricated by fixing to a circumference edge portion of a cover sheet 10 edge members 110, 120, 130, 210, 220, 230, 310 and 410 via fastening members such as bolts and nuts. The cover sheet 10 and each of the edge members are formed by nesting an expansion plan based on a three-dimensional solid model data of the cover unit 1 on a sheet metal material on a laser beam machine, and subjecting the same to laser processing. At this time, various information such as bend lines and bend angles required in the post process are marked off on each component via laser processing. The components having been subjected to high-precision laser processing are subjected to necessary bending process. The components are then assembled using fastening members to fabricate a large sheet metal product having a three-dimensional shape without performing a welding process.

## Description

### BACKGROUND OF THE INVENTION

### Field of the invention

The present invention relates to a sheet metal product having a three-dimensional shape, such as a cover of a machine tool, and the method for fabricating the same.

### Description of the related art

Generally, when fabricating a sheet metal product having a three-dimensional shape such as a cover of a machine tool, the sheet metal components constituting the cover are subjected to plan expansion based on a design drawing of the cover. Then, the group of components having been subjected to plan expansion is nested on a sizing sheet metal via a CAM. Then, the group of nested components is cut out using a laser beam machine, and the areas of the cut-out components that must be bent are bent via a press brake. Components constituting the cover fabricated by the above process are then assembled to complete the fabrication of the cover.

In the above method, the process of fabricating components constituting the cover and assembling the components generally involves assembling components via welding. During the welding process, marking-off lines are provided to welding areas of each of the components so as to confirm the weld position, and the components are fixed via a jig to perform welding. The welding process requires a superior weld technique and must be performed by a practiced skilled worker, in order to minimize thermal distortion by the weld so that no additional distortion correction is required in the post process.

For example, Japanese Patent Application Laid-Open Publication No. 8-317514 (patent document 1) discloses preparing an independent metal fitting as a structure for reinforcing corner portions or the like of a sheet metal product which is a housing for an electronic apparatus, and assembling the same via a fastening tool such as a rivet.

A large-size sheet metal product having a three-dimensional shape, such as a cover of a machine tool, is required to be subjected to opening and closing operation, to have a transparent window for observing the inner side thereof, to have a means for sealing cut dust and cutting fluid sprayed in the machine, and to have rigidity.

Therefore, a structure is adopted that enables to ensure necessary rigidity by fixing a plurality of edge members to the circumferential edge portions of the cover body.

Conventionally, welding is used as the means for fixing edge members.

Welding operation not only requires skills, but may also cause drawbacks such as thermal distortion. Furthermore, the work environment thereof is harsh, and the work efficiency cannot be improved easily.

### SUMMARY OF THE INVENTION

Therefore, the obj ect of the present invention is to provide a method for fabricating a sheet metal product formed by assembling a plurality of components without using welding means, and a product fabricated by the method.

In order to achieve the above objects, the present invention provides a method for fabricating a sheet metal product having a three-dimensional shape by assembling a plurality of members, comprising the steps of nesting an expansion plan of a sheet member and a member to be fixed to the sheet member on a sheet metal material on a laser beam machine based on a three-dimensional solid model data of the sheet metal product; marking off a bend line and a bend angle on the sheet member that must be subjected to bending process in a post process via laser processing; marking off parts information, a bend line and a bend angle on the member to be fixed to the sheet member via laser processing; forming a hole through which a fastening member is passed through on the sheet member and the member to be fixed to the sheet member via laser processing; bending the sheet member subjected to laser processing to form a three-dimensional shape; and fixing the member to be fixed to the bent sheet member via a fastening member.

Furthermore, if necessary, the present method includes applying a sealing material between the sheet member and the member to be fixed to the sheet member.

Moreover, a sheet metal product having a three-dimensional shape according to the present invention is fabricated by the fabrication method mentioned above.

According to the present invention, a large-size sheet metal product having a three-dimensional shape can be fabricated without using welding means.

The present invention enables products to be fabricated in a clean environment without having to perform welding processes that require skills.

Moreover, the processing of the components is realized by utilizing a three-dimensional solid model data of the product and nesting the expansion plan thereof on a sheet metal material on a laser beam machine to fabricate the components via high-precision laser processing, so that the components are highly precise, and the assembly thereof is facilitated.

Furthermore, since no thermal distortion by welding occurs according to the present invention, a large-size sheet metal component can be fabricated with high accuracy.

### BRIEF DESCRIPTION OF THE DRAWINGS

FIG. 1 is a perspective view showing one example of a sheet metal product according to a preferred embodiment of the present invention;
FIG. 2 is an exploded view showing the main components constituting a cover unit;
FIG. 3A is a three-dimensional view of the cover sheet, and FIG. 3B is an expansion plan thereof;
FIG. 4 is an explanatory view showing the state in which a material corresponding to the expansion plan of the cover sheet or edge members are nested on a plate material;
FIG. 5 is a perspective view showing components constituting the cover unit from a different angle;
FIG. 6 is a perspective view showing how components are attached to the upper edge portion and left edge portion of the cover sheet;
FIG. 7 is a perspective view showing how components are attached to the upper edge portion and right edge portion of the cover sheet;
FIG. 8 is a perspective view showing how components are attached to the lower edge portion and left edge portion of the cover sheet;
FIG. 9 is a perspective view showing how components are attached to the lower edge portion and right edge portion of the cover sheet;
FIG. 10 is a perspective view showing the cover unit having completed assembly of all the components from a different angle;
FIG. 11 is a perspective view showing the cover unit having completed assembly of all the components from a different angle; and
FIG. 12 is a perspective view showing the cover unit having completed assembly of all the components from a different angle.

### DETAILED DESCRIPTION OF THE PREFERRED EMBODIMENTS

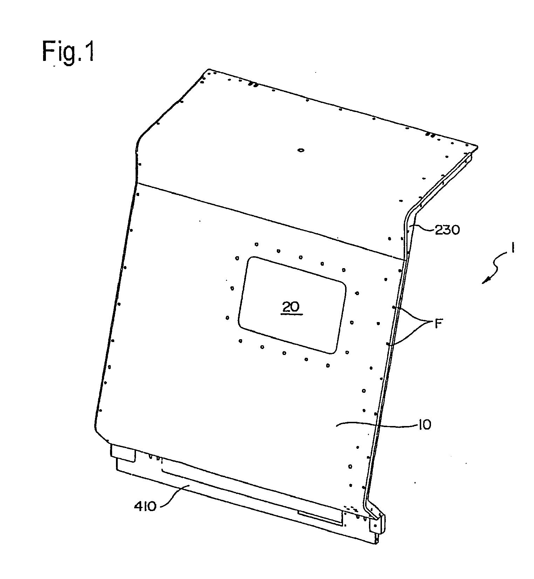

FIG. 1 is a perspective view showing one example of a sheet metal product according to a preferred embodiment of the present invention.

A sheet metal product denoted as a whole by reference number 1 is, for example, a cover unit mounted on a front face of a machine tool.

The cover unit 1 is composed of a cover sheet 10 fabricated by forming a metal plate, and edge members 230, 410 and the like described later to be attached mainly to the circumference of the cover sheet 10.

The cover sheet 10 has an opening 20 or the like for mounting a window that enables users to observe the processing unit of the machine tool from outside the cover.

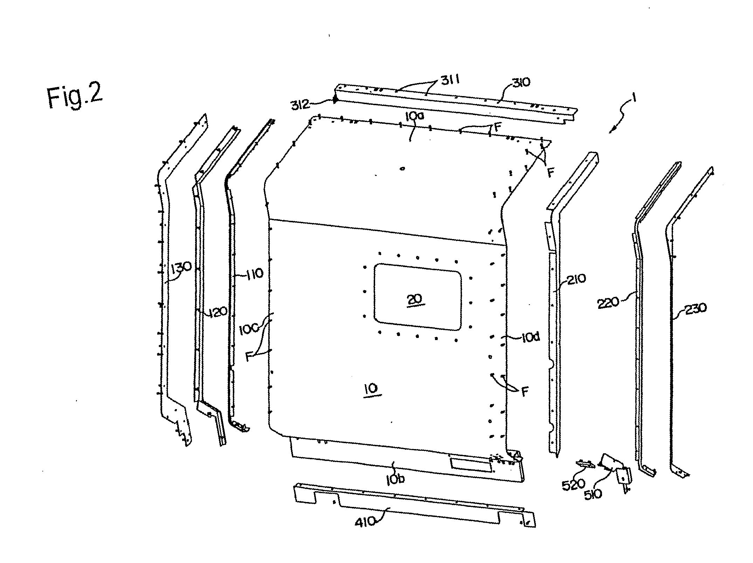

FIG. 2 is an exploded view illustrating the major components that constitute the cover unit 1.

The view shows the cover sheet 10 from the front side thereof, and on an upper edge portion 10a, a lower edge portion 10b, a left edge portion 10c and a right edge portion 10d of the cover sheet 10 are provided reinforcement members that ensure the rigidity of the cover sheet 10 formed of a thin metal sheet.

An edge member 310 fixed to an inner side of the upper edge portion 10a of the cover sheet 10 is fixed via multiple fastening members F utilizing bolts, nuts and the like.

Bolt holes 311 for allowing bolts to pass therethrough are formed in advance to the edge member 310 formed by bending a long narrow metal plate into an L-shape, and the end of the edge member is bent to form a mounting portion 312.

The cover sheet 10 is fabricated by preparing a material by cutting a plate metal material into a predetermined shape via a laser beam machine, forming bolt holes and the like simultaneously thereto, and bending the material into a predetermined shape.

The edge member 310 is subjected to nesting simultaneously with the cover sheet 10 and fabricated. Since these materials are subjected to high-precision processing via the laser beam machine, the accuracy of the bolt hole positions and the like is high, and the assembly and fixing thereof is facilitated.

An edge member 410 is attached to a lower edge portion 10b of the cover sheet 10. Three edge members 110, 120 and 130 are fixed to the left edge portion 10c of the cover sheet 10 via fastening members F. Similarly, three edge members 210, 220 and 230 are fixed to the right edge portion 10d of the cover sheet 10. A bracket 510 and a plate 520 are attached to the right side of the lower edge of the cover sheet 10.

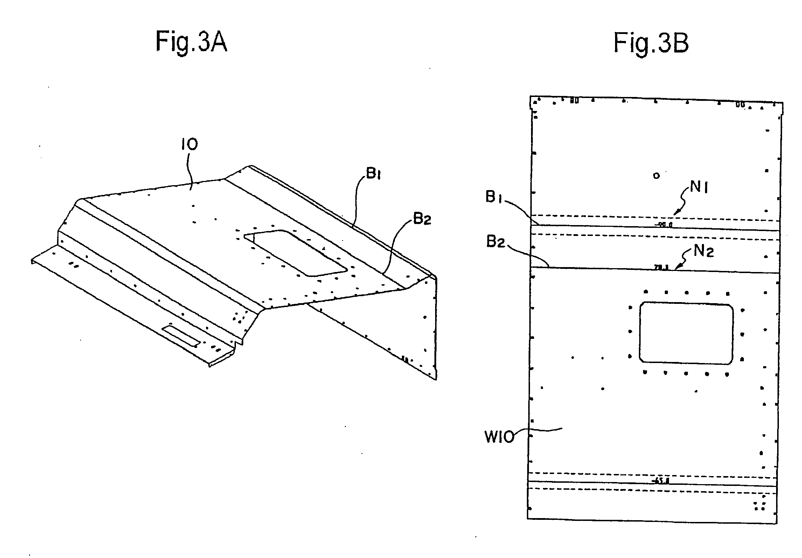

FIG. 3A is a three-dimensional view of the cover sheet 10, and FIG. 3B is an expansion plan thereof.

Bend lines B₁ and B₂ and bend angles N₁ and N₂ are marked off via laser processing on an expansion plan W10 of the cover sheet.

It is also possible to mark off any information necessary in the post process.

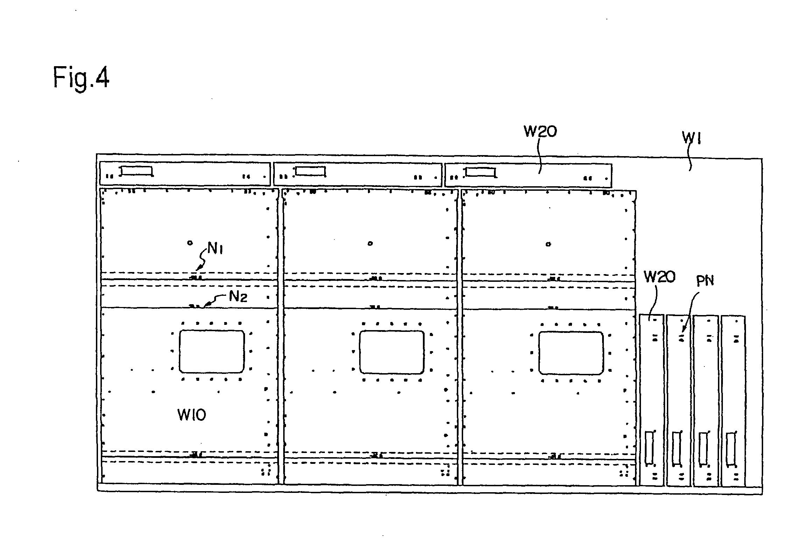

FIG. 4 illustrates a state in which the material W10 corresponding to the expansion plan of the cover sheet and edge material W20 are nested on a plate material W1. The laser beam machine provides high-precision processing to the members based on the nesting.

Of the members subjected to processing in the laser beam machine, the cover sheet 10 is further subjected to necessary bending process via a bending machine such as a bender using as reference the bend lines B₁ and B₂ and bend angles N₁ and N₂ marked off on the surface thereof via laser processing.

Furthermore, necessary information such as the part number PN, the bend lines and the bend angles are marked off via laser processing on the surface of the edge material W20 to be fixed to the cover sheet.

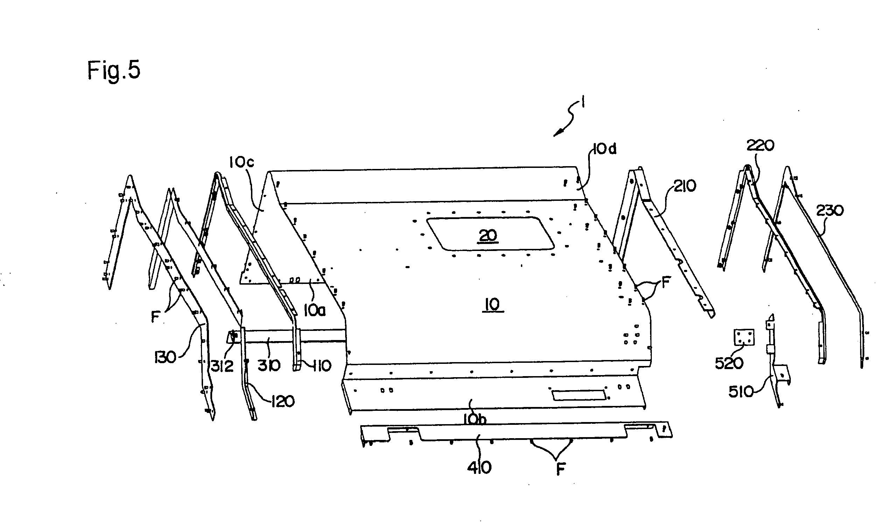

FIG. 5 is a perspective view showing the components constituting the cover unit 1 from a different angle.

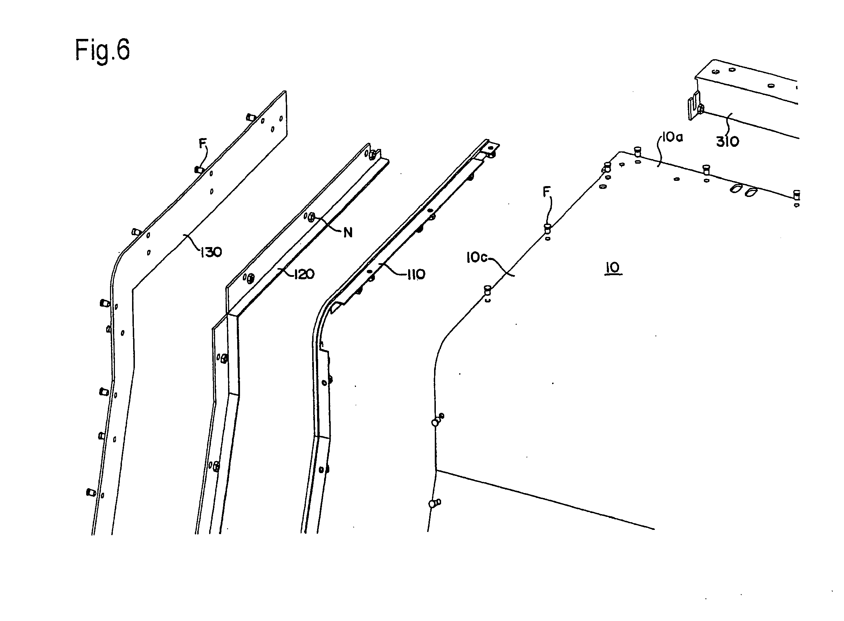

FIG. 6 is a perspective view showing how members are fastened to the upper edge portion 10a and left edge portion 10c of the cover sheet 10.

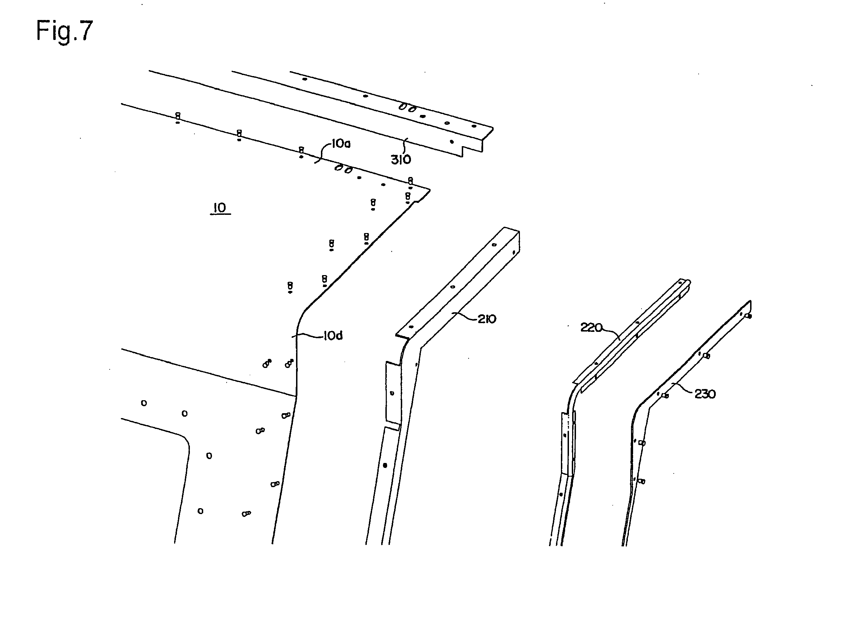

FIG. 7 is a perspective view showing how members are fastened to the upper edge portion 10a and right edge portion 10d of the cover sheet 10.

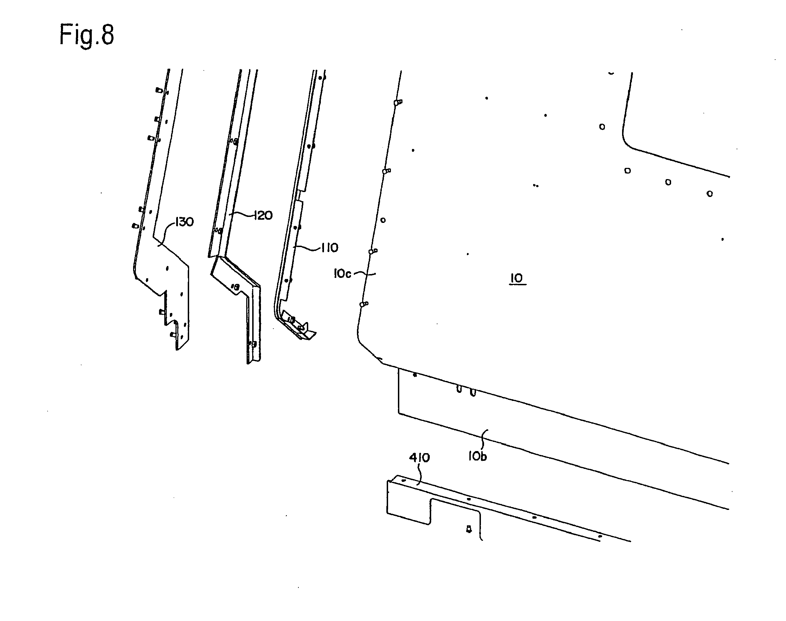

FIG. 8 is a perspective view showing how members are fastened to the lower edge portion 10b and left edge portion 10c of the cover sheet 10.

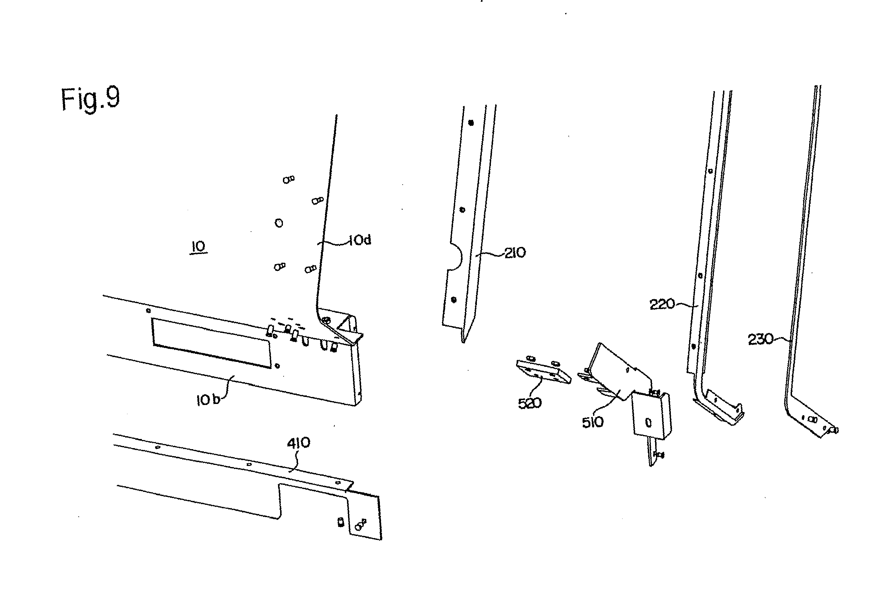

FIG. 9 is a perspective view showing how members are fastened to the lower edge portion 10b and right edge portion 10d of the cover sheet 10.

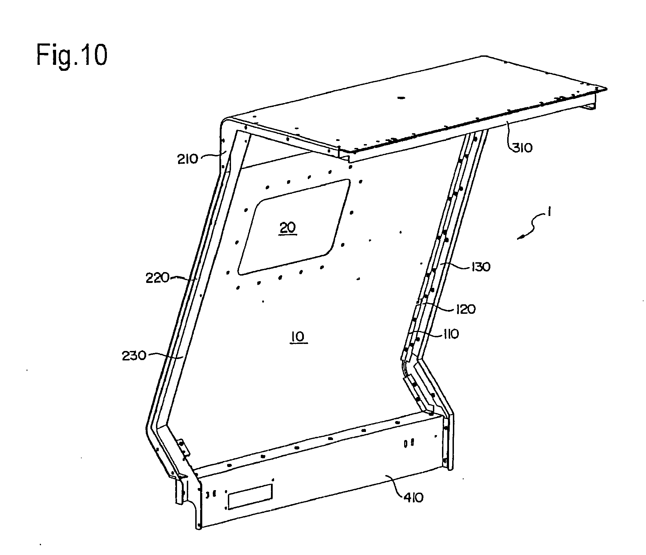

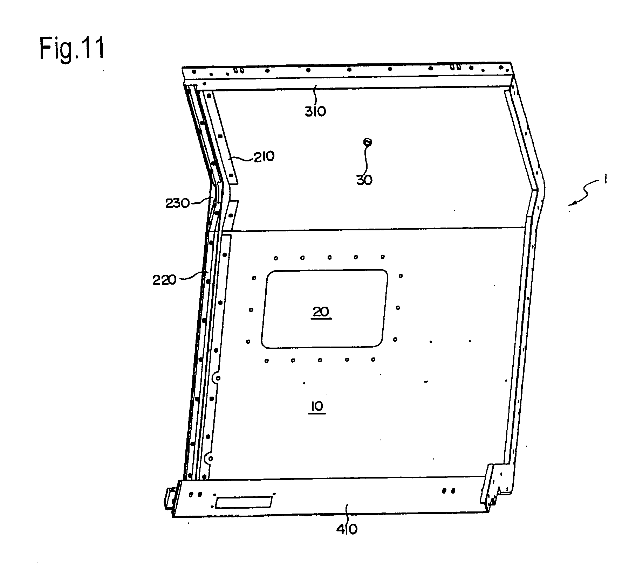

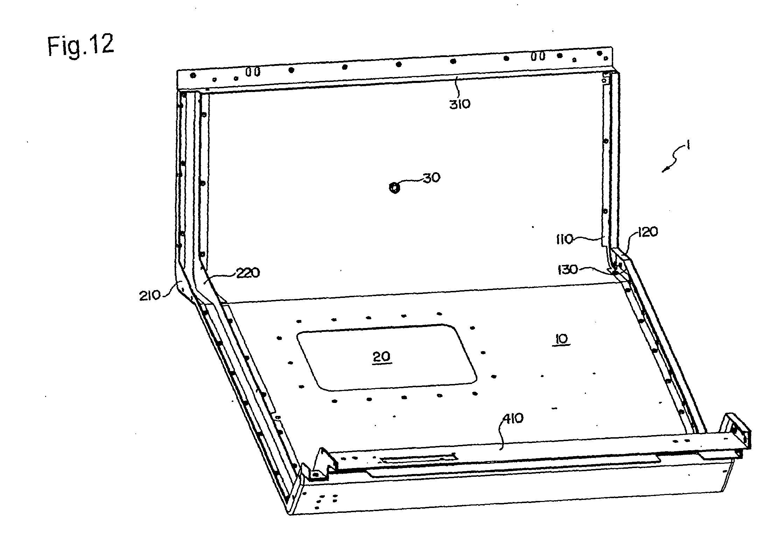

FIGS. 10 through 12 are perspective views showing the cover unit 1 having completed assembling all the components from various angles.

According to some processing conditions, a large amount of cutting fluid is sprayed in the interior of the cover unit of the machine tool. Therefore, the cover unit is required to exert a liquid-tight property.

Therefore, according to the cover unit of the present invention, a sealing material is applied to the joint surface between the cover sheet and the edge member so as to ensure liquid-tight property.

## Claims

1. A method for fabricating a sheet metal product having a three-dimensional shape by assembling a plurality of members, comprising the steps of:
nesting an expansion plan of a sheet member and a member to be fixed to the sheet member on a sheet metal material on a laser beam machine based on a three-dimensional solid model data of the sheet metal product;
marking off a bend line and a bend angle on the sheet member that must be subjected to bending process in a post process via laser processing;
marking off parts information, a bend line and a bend angle on the member to be fixed to the sheet member via laser processing;
forming a hole through which a fastening member is passed through on the sheet member and the member to be fixed to the sheet member via laser processing;
bending the sheet member subjected to laser processing to form a three-dimensional shape; and
fixing the member to be fixed to the sheet member to the bent sheet member via a fastening member.

2. A method for fabricating a sheet metal product having a three-dimensional shape by assembling a plurality of members, comprising the steps of:
nesting an expansion plan of a sheet member and a member to be fixed to the sheet member on a sheet metal material on a laser beam machine based on a three-dimensional solid model data of the sheet metal product;
marking off a bend line and a bend angle on the sheet member that must be subjected to bending process in a post process via laser processing;
marking off parts information, a bend line and a bend angle on the member to be fixed to the sheet member via laser processing;
forming a hole through which a fastening member is passed through on the sheet member and the member to be fixed to the sheet member via laser processing;
bending the sheet member subjected to laser processing to form a three-dimensional shape;
applying a sealing material between the sheet member and the member to be fixed to the sheet member; and
fixing the member to be fixed to the sheet member to the bent sheet member via a fastening member.

3. A sheet metal product having a three-dimensional shape fabricated by the fabrication method according to claim 1 or claim 2.

4. A cover unit of a machine tool fabricated by the fabrication method according to claim 1 or claim 2.
